# EUROPEAN PATENT APPLICATION

(11) **EP 4 786 276 A1**
(43) Date of publication of application: **05.08.2026**
(21) Application number: 25198386.2
(22) Date of filing: 27.08.2025
(51) Int. Cl.: B60Q 1/26, B60Q 1/38, B60Q 1/52, F21S 43/14, F21S 43/15, F21S 43/20, F21S 45/47, F21S 43/31

(54) **WARNING LIGHT FOR A VEHICLE**

(30) Priority: 03.02.2025 TW 114103777
(71) Applicant: Juluen Enterprise Co., Ltd., New Taipei City 236 (TW)
(72) Inventor: Lo, Yuan-Ching, 236 New Taipei City (TW); Yen, Shuo-Ying, 236 New Taipei City (TW); Chou, Kai-Ming, 236 New Taipei City (TW)
(74) Representative: Straus, Alexander

(57) **Abstract**

An optical element (18) includes a first light entrance surface (N1), a second light entrance surface (N2), a third light entrance surface (N3), a first light exit surface (O1), a second light exit surface (O2), a first reflective surface (R1), a third light exit surface (O3), a second reflective surface (R2) and a third reflective surface (R3). By the relative arrangement between the first light entrance surface (N1), the second light entrance surface (N2), the third light entrance surface (N3), the first light exit surface (O1), the second light exit surface (O2), the first reflective surface (R1), the third light exit surface (O3), the second reflective surface (R2) and the third reflective surface (R3), the optical element (18) can have the characteristics of high light intensity and miniaturization.

## Description

### Field of the Invention

The present invention relates to an optical element and a warning light, particularly an optical element having the characteristics of high light intensity and miniaturization, and a flexible warning light.

### Background of the Invention

In recent years, the technology of light emitting diode (LED) has become increasingly mature, and the LED has gradually replaced traditional light source and is used in a headlight or a warning light of a vehicle. An optical element of the traditional headlight or warning light usually adopts a reflector disposed around the light source to reflect light. However, the reflector will absorb part of the light source, causing the brightness of the headlight or warning light to decrease. Furthermore, the relative position of the LED and the optical element in the headlight or warning light must meet high optical precision requirement. Thus, when the LED replace traditional light source and is combined with traditional optical element, problems such as incorrect light shape or insufficient brightness of the illuminated target easily occur. Still further, the warning light is mostly installed in the vehicle by a bracket. Thus, the existing warning light requires the development of dedicated brackets for different types of vehicles. Too many types of brackets and excess inventory will cause trouble for manufacturers. Moreover, since the bracket of the warning light cannot be completely attached to the windshield, the problem of light leakage will occur after installation.

### Summary of the Invention

The present invention aims at providing an optical element having the characteristics of high light intensity and miniaturization, and a flexible warning light, thereby resolving the aforesaid problems.

This is achieved by an optical element according to claims 1, a warning light according to claim 7, and an optical element according to claim 14. The dependent claims pertain to corresponding further developments and improvements.

As will be seen more clearly from the detailed description following below, the claimed optical element includes a first light entrance surface, a second light entrance surface, a third light entrance surface, a first light exit surface, a second light exit surface, a first reflective surface, a third light exit surface, a second reflective surface and a third reflective surface. The second light entrance surface is adjacent to the first light entrance surface. The third light entrance surface is adjacent to the second light entrance surface. The first light exit surface is arranged relative to the first light entrance surface. The second light exit surface is adjacent to the first light exit surface. The first reflective surface is adjacent to the second light exit surface. The third light exit surface is adjacent to the first reflective surface. The second reflective surface is adjacent to the third light exit surface. The third reflective surface is adjacent to the second reflective surface and the third light entrance surface. A first portion of a light sequentially passes through the first light entrance surface and the first light exit surface to travel out of the optical element. A second portion of the light sequentially passes through the second light entrance surface, is reflected by the first reflective surface, and passes through the second light exit surface to travel out of the optical element. A third portion of the light sequentially passes through the third light entrance surface, is reflected by the third reflective surface, is reflected by the second reflective surface, and passes through the third light exit surface (O3) to travel out of the optical element.

In an embodiment, the first portion of the light travels out of the optical element along a first light path, the second portion of the light travels out of the optical element along a second light path, the third portion of the light travels out of the optical element along a third light path, and the second light path is located between the first light path and the third light path.

In an embodiment, the first light path, the second light path and the third light path do not intersect each other.

In an embodiment, in a direction perpendicular to a light emitting direction of the optical element, the first light exit surface is lower than the second light exit surface, the second light exit surface is lower than the third light exit surface, and the first reflective surface is lower than the second reflective surface.

In an embodiment, the optical element is arranged relative to a light transmitting member. When an angle between the light transmitting member and a light emitting direction of the optical element is between 10 degrees and 80 degrees, an angle between the first reflective surface and the light emitting direction is between 70 degrees and 20 degrees, and an angle between the second reflective surface and the light emitting direction is between 70 degrees and 20 degrees.

In an embodiment, the first light exit surface is an asymmetric curved surface, and at least one of the second light exit surface and the third light exit surface is an aspherical structure.

As will be seen more clearly from the detailed description following below, the claimed warning light includes a casing, a heat dissipation plate, a circuit board, a plurality of light sources and an optical element. The heat dissipation plate is disposed in the casing. The circuit board is disposed in the casing and stacked on the heat dissipation plate. The plurality of light sources are disposed on the circuit board at intervals. The optical element is disposed in the casing and stacked on the circuit board. A light emitted by each of the plurality of light sources travels out of the optical element. The casing and the optical element are flexible.

In an embodiment, the heat dissipation plate and the circuit board are flexible like the casing and the optical element.

In an embodiment, the casing includes a plurality of deformable structures, wherein the plurality of deformable structures protrude form opposite sides of the casing.

In an embodiment, the warning light is attached to a surface of a light transmitting member by the casing. When an angle between the light transmitting member and a horizontal plane is between 10 degrees and 80 degrees, an angle between an attached portion of the casing and the surface of the light transmitting member is between 12 degrees and 82 degrees.

In an embodiment, the optical element includes a first light entrance surface, a second light entrance surface, a third light entrance surface, a first light exit surface, a second light exit surface, a first reflective surface, a third light exit surface, a second reflective surface and a third reflective surface. The second light entrance surface is adjacent to the first light entrance surface. The third light entrance surface is adjacent to the second light entrance surface. The first light exit surface is arranged relative to the first light entrance surface. The second light exit surface is adjacent to the first light exit surface. The first reflective surface is adjacent to the second light exit surface. The third light exit surface is adjacent to the first reflective surface. The second reflective surface is adjacent to the third light exit surface. The third reflective surface is adjacent to the second reflective surface and the third light entrance surface. A first portion of a light sequentially passes through the first light entrance surface and the first light exit surface to travel out of the optical element. A second portion of the light sequentially passes through the second light entrance surface, is reflected by the first reflective surface, and passes through the second light exit surface to travel out of the optical element. A third portion of the light sequentially passes through the third light entrance surface, is reflected by the third reflective surface, is reflected by the second reflective surface, and passes through the third light exit surface (O3) to travel out of the optical element.

In an embodiment, the first portion of the light travels out of the optical element along a first light path, the second portion of the light travels out of the optical element along a second light path, the third portion of the light travels out of the optical element along a third light path, and the second light path is located between the first light path and the third light path.

In an embodiment, in a direction perpendicular to a light emitting direction of the optical element, the first light exit surface is lower than the second light exit surface, the second light exit surface is lower than the third light exit surface, and the first reflective surface is lower than the second reflective surface.

As will be seen more clearly from the detailed description following below, the claimed optical element includes a light entrance structure, a light exit structure and a reflective structure. The light entrance structure is configured to receive a light. The light exit structure includes a first light exit surface and a second light exit surface. The first light exit surface and the second light exit surface are different in geometrical shape. The reflective structure is connected between the light entrance structure and the light exit structure. The reflective structure includes a first reflective surface and a second reflective surface. The second reflective surface is located between the first reflective surface and the second light exit surface.

In an embodiment, the first light exit surface is an asymmetric curved surface, the second light exit surface has two aspherical structures, and the optical element includes a transition plane connected between the first light exit surface and the second light exit surface.

In an embodiment, a surface curvature of the first light exit surface changes gradually and continuously, the first light exit surface includes at least one freeform surface, and a surface curvature of the second light exit surface also changes gradually and continuously.

In an embodiment, the first reflective surface is a freeform surface with total reflection function, and the second reflective surface is a plane with total reflection function.

In an embodiment, a first portion of the light sequentially passes through a first light entrance surface of the light entrance structure and the first light exit surface to travel out of the optical element. A second portion of the light sequentially passes through a second light entrance surface of the light entrance structure, is reflected by a first sub-reflective surface of the second reflective surface, and passes through a first sub-light exit surface of the second light exit surface to travel out of the optical element. A third portion of the light sequentially passes through a third light entrance surface of the light entrance structure, is reflected by the first reflective surface, is reflected by a second sub-reflective surface of the second reflective surface, and passes through a second sub-light exit surface of the second light exit surface to travel out of the optical element. The second portion and the third portion of the light intersect each other inside the optical element.

In an embodiment, the first light entrance surface and the third light entrance surface are refraction surfaces, and the second light entrance surface is a light condensing surface.

### Brief Description of the Drawings

In the following, the invention is further illustrated by way of example, taking reference to the accompanying drawings thereof:
FIG. 1 is a perspective view illustrating a light source module according to an embodiment of the invention,
FIG. 2 is a side view illustrating the light source module shown in FIG. 1,
FIG. 3 is a side view illustrating the light source module shown in FIG. 1 being disposed on a light transmitting member,
FIG. 4 is a perspective view illustrating the optical element,
FIG. 5 is a perspective view illustrating a warning light according to an embodiment of the invention,
FIG. 6 is an exploded view illustrating the warning light shown in FIG. 5,
FIG. 7 is an exploded view illustrating the warning light shown in FIG. 5 from another viewing angle,
FIG. 8 is an assembly view illustrating a heat dissipation plate and the optical element shown in FIG. 7,
FIG. 9 is a side view illustrating the warning light shown in FIG. 5 being disposed on the light transmitting member,
FIG. 10 is another side view illustrating the warning light shown in FIG. 5 being disposed on the light transmitting member,
FIG. 11 is another side view illustrating the warning light shown in FIG. 5 being disposed on the light transmitting member,
FIG. 12 is a perspective view illustrating the warning light,
FIG. 13 is a perspective view illustrating a light source module according to another embodiment of the invention,
FIG. 14 is a side view illustrating the light source module shown in FIG. 13,
FIG. 15 is a perspective view illustrating the light source module according to another embodiment of the invention,
FIG. 16 is a side view illustrating the light source module shown in FIG. 15,
FIG. 17 is a top view illustrating the light source module shown in FIG. 15, and
FIG. 18 is another top view illustrating the light source module shown in FIG. 15.

### Detailed Description

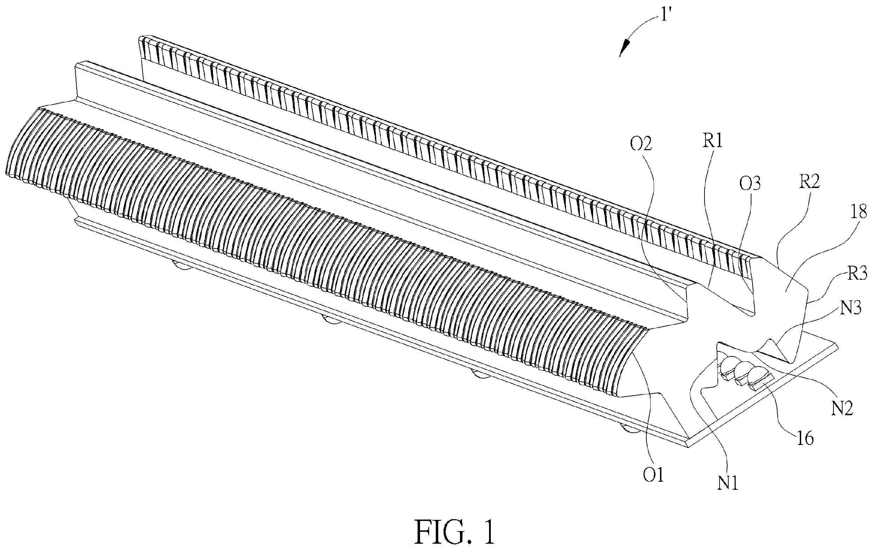

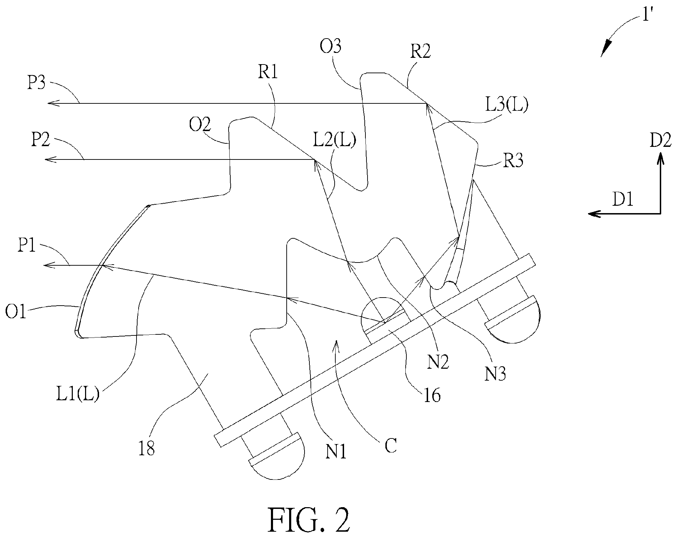

Referring to FIGs. 1 and 2, FIG. 1 is a perspective view illustrating a light source module 1' according to an embodiment of the invention, and FIG. 2 is a side view illustrating the light source module 1' shown in FIG. 1.

As shown in FIGs. 1 and 2, the light source module 1' comprises a light source 16 and an optical element 18. The light source 16 is configured to emit a light L. The optical element 18 is arranged on a transmission path of the light L. The optical element 18 comprises a first light entrance surface N1, a second light entrance surface N2, a third light entrance surface N3, a first light exit surface O1, a second light exit surface O2, a first reflective surface R1, a third light exit surface O3, a second reflective surface R2 and a third reflective surface R3. The second light entrance surface N2 is adjacent to the first light entrance surface N1. The third light entrance surface N3 is adjacent to the second light entrance surface N2. The first light exit surface O1 is arranged relative to the first light entrance surface N1. The second light exit surface O2 is adjacent to the first light exit surface O1. The first reflective surface R1 is adjacent to the second light exit surface O2. The third light exit surface O3 is adjacent to the first reflective surface R1. The second reflective surface R2 is adjacent to the third light exit surface O3. The third reflective surface R3 is adjacent to the second reflective surface R2 and the third light entrance surface N3. A first portion L1 of a light L sequentially passes through the first light entrance surface N1 and the first light exit surface O1 to travel out of the optical element 18. A second portion L2 of the light L sequentially passes through the second light entrance surface N2, is reflected by the first reflective surface R1, and passes through the second light exit surface O2 to travel out of the optical element 18. A third portion L3 of the light L sequentially passes through the third light entrance surface N3, is reflected by the third reflective surface R3, is reflected by the second reflective surface R2, and passes through the third light exit surface O3 to travel out of the optical element 18. Since the first portion L1, the second portion L2 and the third portion L3 of the light L travel out of the optical element 18 in the same side, the optical element 18 can greatly deflect the light L emitted by the light source 16 and concentrate it to travel out of the optical element 18 in the same side, so as to enhance the light L with a greater light intensity.

In this embodiment, since the refractive index of the optical element 18 is larger than the refractive index of the medium (e.g. air) outside the optical element 18, the second portion L2 of the light L can be totally reflected at the first reflective surface R1 to be reflected to the second light exit surface O2, and the third portion L3 of the light L can be totally reflected at the third reflective surface R3 and the second reflective surface R2 in sequence to be reflected to the third light exit surface O3. In other words, the second portion L2 and the third portion L3 of the light L change their traveling directions through total reflection, thereby reducing energy loss in the process. Accordingly, the optical element 18 can reduce the energy loss of the light L during the process of reflecting the light, such that the optical element 18 can efficiently guide the light L to a light emitting direction D1 of the optical element 18 and make the light L have a greater light intensity.

Furthermore, in other embodiments, the optical element 18 may further comprise a reflective layer disposed on the first reflective surface R1, the second reflective surface R2 and the third reflective surface R3, such that the second portion L2 of the light L is reflected by the first reflective surface R1 and incident on the second light exit surface O2, and the third portion L3 of the light L is sequentially reflected by the third reflective surface R3 and the second reflective surface R2 and incident on the third light exit surface O2.

As shown in FIG. 2, the first light entrance surface N1 and the first light exit surface O1 form a first light path P1; the second light entrance surface N2, the first reflective surface R1 and the second light exit surface O2 form a second light path P2; and the third light entrance surface N3, the third reflective surface R3, the second reflective surface R2 and the third light exit surface O3 form a third light path P3. Thus, the first portion L1 of the light L travels out of the optical element 18 along the first light path P1, the second portion L2 of the light L travels out of the optical element 18 along the second light path P2, and the third portion L3 of the light L travels out of the optical element 18 along the third light path P3.

Furthermore, as shown in FIG. 2, in a direction D2 perpendicular to the light emitting direction D1 of the optical element 18, the first light exit surface O1 is lower than the second light exit surface O2, the second light exit surface O2 is lower than the third light exit surface O3, and the first reflective surface R1 is lower than the second reflective surface R2. Thus, the second light path P2 is located between the first light path P1 and the third light path P3, and the first light path P1, the second light path P2 and the third light path P3 do not intersect each other. Accordingly, the overall height of the optical element 18 can be effectively reduced, such that the optical element 18 has the characteristics of high light intensity and miniaturization. Since the first light path P1, the second light path P2 and the third light path P3 do not intersect each other, the first portion L1, the second portion L2 and the third portion L3 of the light L are spatially separated from each other and do not cross each other before traveling out of the optical element 18, so as to avoid interference and energy loss, and it is beneficial to miniaturize the overall structure.

In this embodiment, the first light entrance surface N1, the second light entrance surface N2 and the third light entrance surface N3 may form an accommodating recess C, such that the light source 16 may be disposed in the accommodating space C.

In this embodiment, the optical element 18 may be made of silicone, plastic, acrylic, glass or other suitable transparent materials, the light source 16 may be a light emitting diode (LED), a high-intensity discharge (HID) or other suitable light sources, and it is depend on practical applications. The color of the light L emitted by the light source 16 may be red, blue, yellow, white, green, purple or a combination thereof, but the invention is not so limited.

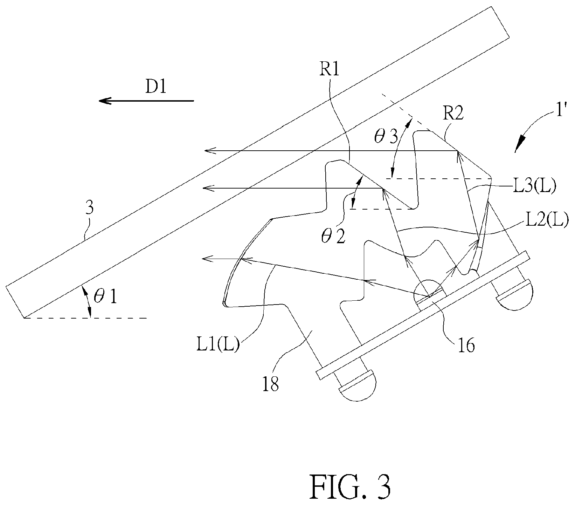

Referring to FIG. 3, FIG. 3 is a side view illustrating the light source module 1' shown in FIG. 1 being disposed on a light transmitting member 3.

As shown in FIG. 3, the light source module 1' is adapted to be disposed on a light transmitting member 3, such that the optical element 18 is arranged relative to the light transmitting member 3. In practical applications, the light source module 1' may be disposed in a casing (not shown) and then the casing may be attached to a surface of the light transmitting member 3. In this embodiment, the light transmitting member 3 may be a windshield or other suitable light transmitting plates according to practical applications. When an angle θ1 between the light transmitting member 3 and the light emitting direction D1 of the optical element 18 is between 10 degrees and 80 degrees, an angle θ2 between the first reflective surface R1 and the light emitting direction D1 may be between 70 degrees and 20 degrees, and an angle θ3 between the second reflective surface R2 and the light emitting direction D1 may be between 70 degrees and 20 degrees, such that the optical element 18 may guide the light L to the light emitting direction D1 more efficiently. In an embodiment, when the angle θ1 between the light transmitting member 3 and the light emitting direction D1 of the optical element 18 is 30 degrees, the angle θ2 between the first reflective surface R1 and the light emitting direction D1 may be 36 degrees, and the angle θ3 between the second reflective surface R2 and the light emitting direction D1 may be 37.39 degrees.

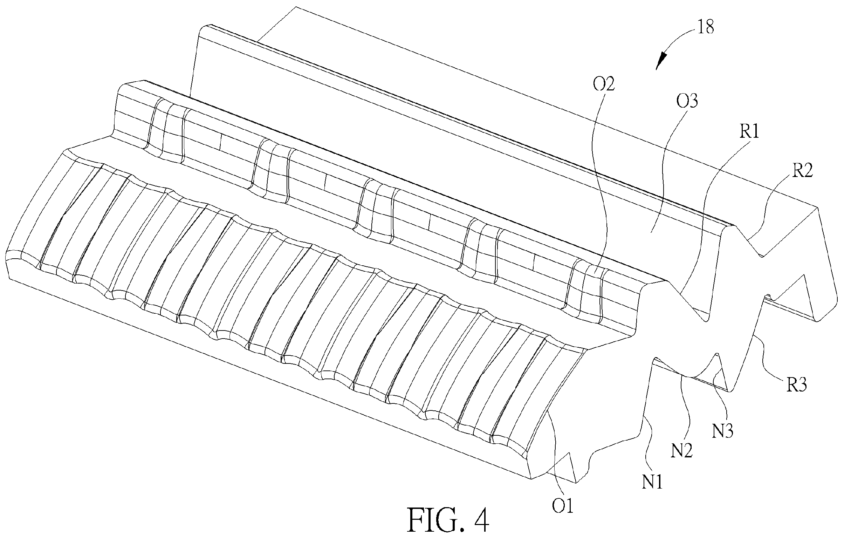

Referring to FIG. 4, FIG. 4 is a perspective view illustrating the optical element 18. As shown in FIG. 4, the first light exit surface O1 may be an asymmetric curved surface, and at least one of the second light exit surface O2 and the third light exit surface O3 may be an aspherical structure. In this embodiment, the second light exit surface O2 is an aspherical structure. In another embodiment, the third light exit surface O3 may also be an aspherical structure like the second light exit surface O2 shown in FIG. 4. Furthermore, a surface curvature of the first light exit surface O1 may change gradually and continuously and the first light exit surface O1 may comprise at least one freeform surface. Still further, the surface curvatures of the second light exit surface O2 and the third light exit surface O3 may also change gradually and continuously. Accordingly, the first light exit surface O1, the second light exit surface O2 and the third light exit surface O3 may finely control the distribution of the emitted light and the degree of expansion in the horizontal direction.

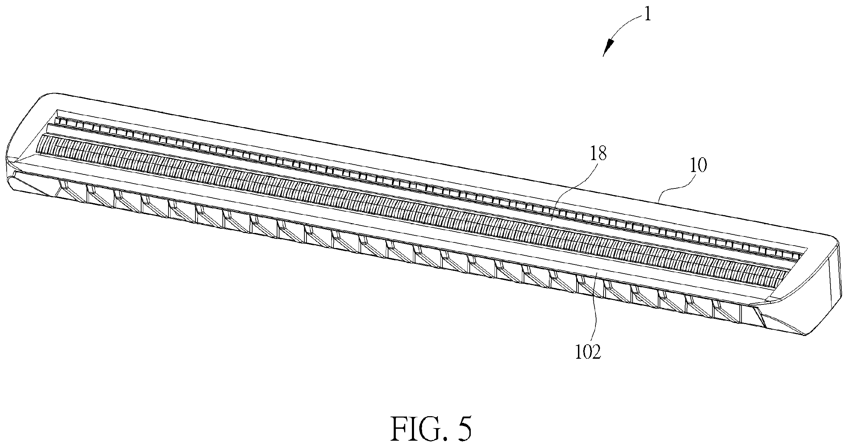

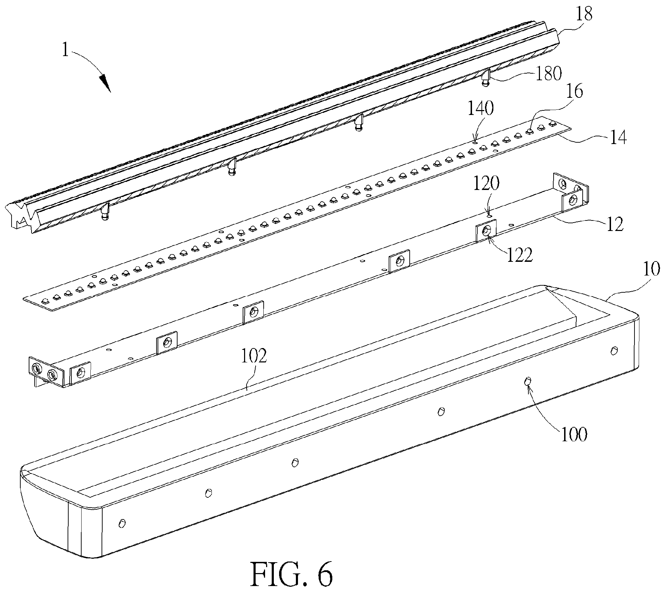

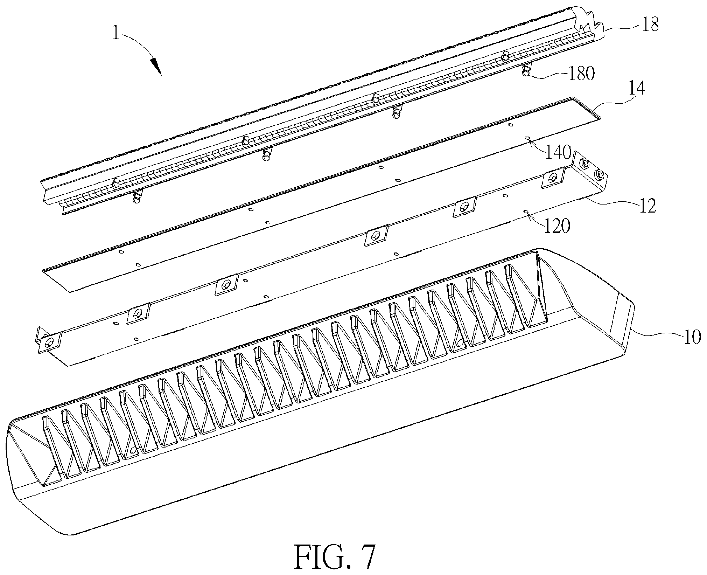

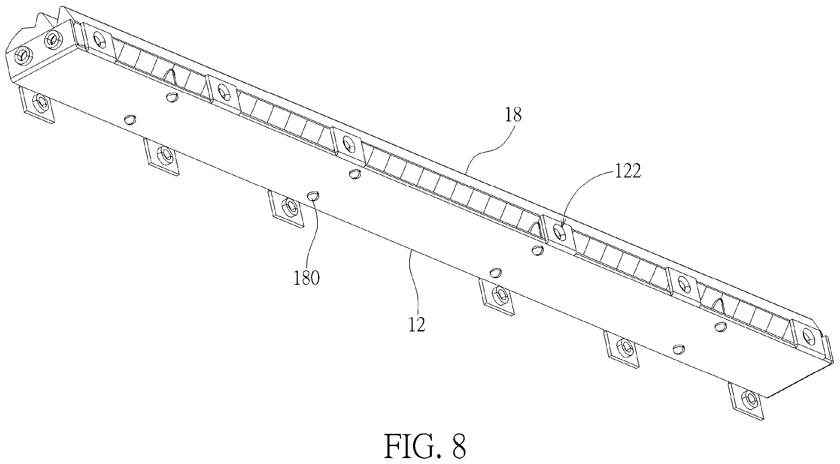

Referring to FIGs. 5 to 8, FIG. 5 is a perspective view illustrating a warning light 1 according to an embodiment of the invention, FIG. 6 is an exploded view illustrating the warning light 1 shown in FIG. 5, FIG. 7 is an exploded view illustrating the warning light 1 shown in FIG. 5 from another viewing angle, and FIG. 8 is an assembly view illustrating a heat dissipation plate 12 and the optical element 18 shown in FIG. 7.

As shown in FIGs. 5 to 8, the warning light 1 comprises a casing 10, a heat dissipation plate 12, a circuit board 14, a plurality of light sources 16 and an optical element 18. The heat dissipation plate 12, the circuit board 14, the plurality of light sources 16 and the optical element 18 are disposed in the casing 10. In this embodiment, the light sources 16 and the optical element 18 may form the aforesaid light source module 1', wherein the configuration relationship and working principle of the light sources 16 and the optical element 18 are as described above and will not be repeated herein. The circuit board 14 is stacked on the heat dissipation plate 12, the light sources 16 are disposed on the circuit board 14 at intervals, and the optical element 18 is stacked on the circuit board 14. In this embodiment, the casing 10 and the optical element 18 are flexible, such that the warning light 1 is flexible. Thus, the warning light 1 can be completely attached to a surface curvature of different windshields, such that the optical element 18 can adapt to various curved surfaces to provide a more flexible lighting effect. For further explanation, since the warning light 1 is flexible, the warning light 1 can elastically deform to be completely attached to the surface curvature of different windshields without adjusting the angle, such that the warning light 1 can improve the problem of light leakage and is suitable for different types of vehicles. In other embodiments, the heat dissipation plate 12 and the circuit board 14 may also be flexible like the casing 10 and the optical element 18, such that the warning light 1 is flexible as a whole and can be further thinned. In an embodiment, the casing 10 of the warning light 1 may be attached to the windshield by adhesive, but the invention is not so limited. In this embodiment, the casing 10 may be made of silicone or other flexible materials, and the circuit board 14 may be a soft circuit board or other flexible circuit boards.

As shown in FIGs. 6 and 7, the optical element 18 may comprise a plurality of engaging portions 180, the heat dissipation plate 12 may comprise a plurality of engaging holes 120, and the circuit board 14 may comprise a plurality of through holes 140, wherein the positions of the engaging portions 180, the positions of the engaging holes 120 and the positions of the through holes 140 correspond to each other. Each of the engaging portions 180 may pass through one of the through holes 140 to engage with one of the engaging holes 120, such that the optical element 18, the circuit board 14 and the heat dissipation plate 12 are fixed with each other. Furthermore, as shown in FIG. 6, the casing 10 may comprise a plurality of through holes 100, and the heat dissipation plate 12 may comprise a plurality of fixing holes 122, wherein the positions of the plurality of through holes 100 correspond to the positions of the plurality of fixing holes 122. In an embodiment, a fixing member (e.g. screw, not shown) may pass through the through hole 100 to be fixed to the fixing hole 122, such that the heat dissipation plate 12 is fixed to the casing 10. Accordingly, the heat dissipation plate 12, the circuit board 14, the light sources 16 and the optical element 18 can be assembled in the casing 10.

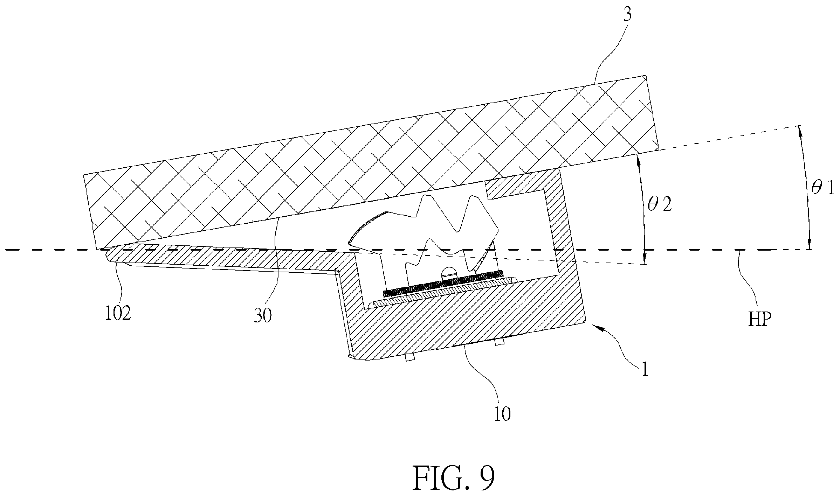

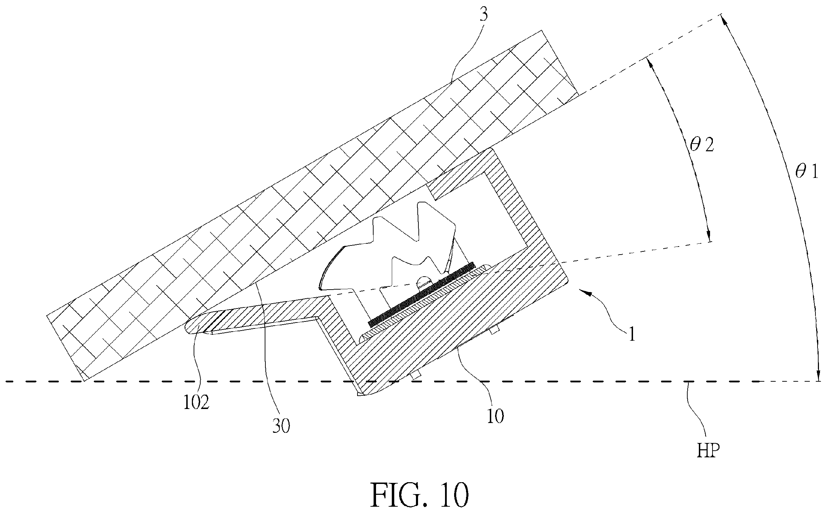

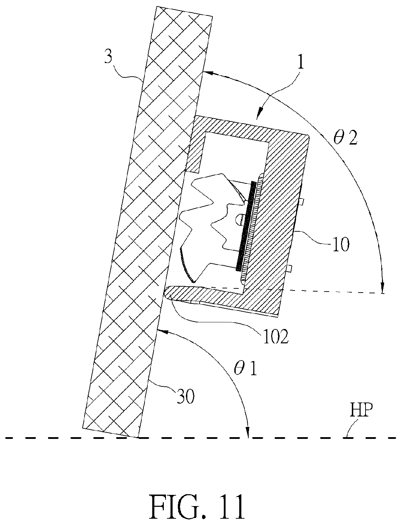

Referring to FIGs. 9 to 11, FIG. 9 is a side view illustrating the warning light 1 shown in FIG. 5 being disposed on the light transmitting member 3, FIG. 10 is another side view illustrating the warning light 1 shown in FIG. 5 being disposed on the light transmitting member 3, and FIG. 11 is another side view illustrating the warning light 1 shown in FIG. 5 being disposed on the light transmitting member 3.

As shown in FIGs. 9 to 11, the warning light 1 may be attached to a surface 30 of a light transmitting member 3 by the casing 10. In this embodiment, the light transmitting member 3 may be a windshield or other suitable light transmitting plates according to practical applications. In FIG. 9, the angle θ1 between the light transmitting member 3 and a horizontal plane HP is 10 degrees, and the angle θ2 between an attached portion 102 of the casing 10 and the surface 30 of the light transmitting member 3 is 12 degrees. In FIG. 10, the angle θ1 between the light transmitting member 3 and the horizontal plane HP is 30 degrees, and the angle θ2 between the attached portion 102 of the casing 10 and the surface 30 of the light transmitting member 3 is 22 degrees. In FIG. 11, the angle θ1 between the light transmitting member 3 and the horizontal plane HP is 80 degrees, and the angle θ2 between the attached portion 102 of the casing 10 and the surface 30 of the light transmitting member 3 is 82 degrees. In other words, when the angle θ1 between the light transmitting member 3 and the horizontal plane is between 10 degrees and 80 degrees, the angle θ2 between the attached portion 102 of the casing 10 and the surface 30 of the light transmitting member 3 may be between 12 degrees and 82 degrees. Since the warning light 1 is flexible as a whole, when the warning light 1 is attached to the surface 30 of the light transmitting member 3 by the casing 10, the casing 10 can be elastically deformed as the angle between the light transmitting member 3 and the horizontal plane HP changes, such that the casing 10 can be completely attached to the surface 30 of the light transmitting member 3, so as to improve the problem of light leakage.

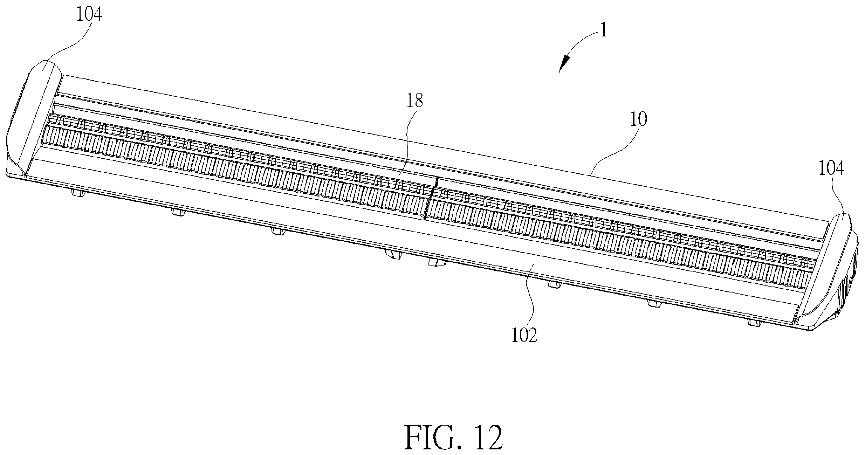

Referring to FIG. 12, FIG. 12 is a perspective view illustrating the warning light 1. As shown in FIG. 12, the casing 10 of the warning light 1 may comprise a plurality of deformable structures 104, wherein the plurality of deformable structures 104 may protrude form opposite sides of the casing 10. In this embodiment, the casing 10 of the warning light 1 may comprise two deformable structures 104, but the invention is not so limited. When the warning light 1 is attached to the surface 30 of the light transmitting member 3 (shown in FIGs. 8 to 10) by the casing 10, the deformable structures 104 will be deformed elastically to be attached to the surface 30 of the light transmitting member 3 tightly, so as to eliminate the gap between the warning light 1 and the light transmitting member 3, and reduce or avoid light leakage from the corresponding side of the warning light 1.

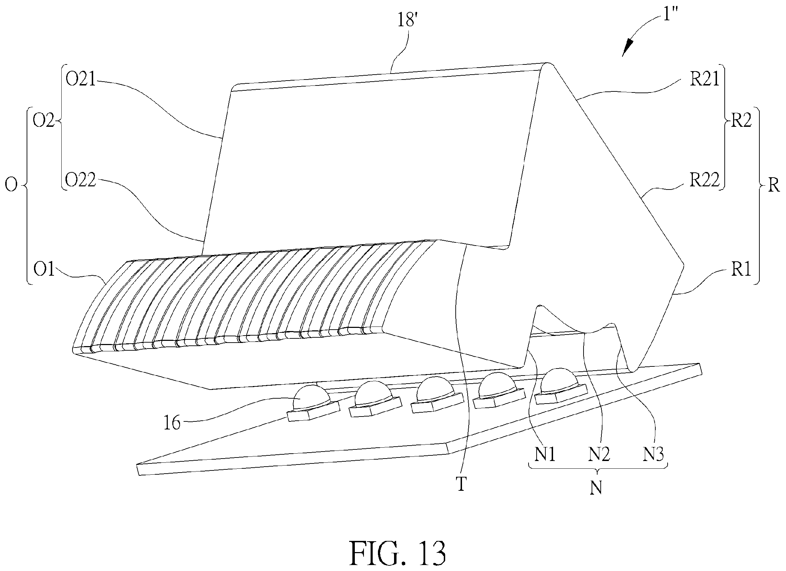

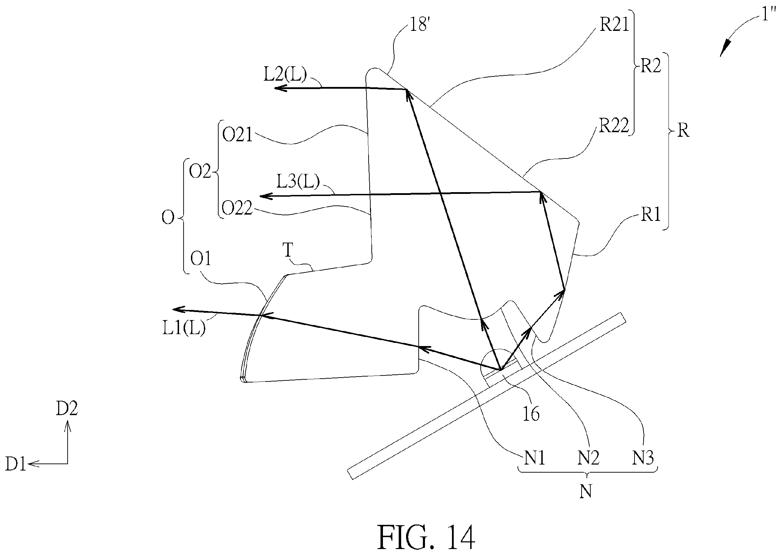

Referring to FIGs. 13 and 14, FIG. 13 is a perspective view illustrating a light source module 1" according to another embodiment of the invention, and FIG. 14 is a side view illustrating the light source module 1" shown in FIG. 13.

As shown in FIGs. 13 and 14, the light source module 1" comprises a light source 16 and an optical element 18'. The light source 16 is configured to emit a light L. The optical element 18' is arranged on a transmission path of the light L. The optical element 18 comprises a light entrance structure N, a light exit structure O, and a reflective structure R. The light entrance structure N is configured to receive the light L emitted by the light source 16. The light exit structure O comprises a first light exit surface O1 and a second light exit surface O2, wherein the first light exit surface O1 and the second light exit surface O2 are different in geometrical shape. The reflective structure R is connected between the light entrance structure N and the light exit structure O. The reflective structure R comprises a first reflective surface R1 and a second reflective surface R2, wherein the second reflective surface R2 is located between the first reflective surface R1 and the second light exit surface O2.

As shown in FIG. 14, a first portion L1 of the light L sequentially passes through a first light entrance surface N1 of the light entrance structure N and the first light exit surface O1 to travel out of the optical element 18'. Furthermore, a second portion L2 of the light L sequentially passes through a second light entrance surface N2 of the light entrance structure N, is reflected by a first sub-reflective surface R21 of the second reflective surface R2, and passes through a first sub-light exit surface O21 of the second light exit surface O2 to travel out of the optical element 18'. Still further, a third portion L3 of the light L sequentially passes through a third light entrance surface N3 of the light entrance structure N, is reflected by the first reflective surface R1, is reflected by a second sub-reflective surface R22 of the second reflective surface R2, and passes through a second sub-light exit surface O22 of the second light exit surface O2 to travel out of the optical element 18'. In this embodiment, in a direction D2 perpendicular to the light emitting direction D1 of the optical element 18', the second sub-light exit surface O22 is lower than the first sub-light exit surface O21, and the second sub-reflective surface R22 is lower than the first sub-reflective surface R21. Thus, the second portion L2 and the third portion L3 of the light L intersect each other inside the optical element 18'. According to the embodiments shown in FIGs. 2 and 14, the invention may allow a portion of the light to intersect or not intersect another portion of the light inside the optical element, so as to meet specific requirements in different applications.

Since the first portion L1, the second portion L2 and the third portion L3 of the light L travel out of the optical element 18' in the same side, the optical element 18' can greatly deflect the light L emitted by the light source 16 and concentrate it to travel out of the optical element 18' in the same side, so as to enhance the light L with a greater light intensity. In this embodiment, the first reflective surface R1 may be a freeform surface with total reflection function, and the second reflective surface R2 may be a plane with total reflection function. Thus, the first reflective surface R1 and the second reflective surface R2 can guide the second portion L2 and the third portion L3 of the light L to the first sub-light exit surface O21 and the second sub-light exit surface O22 of the second light exit surface O2, so as to achieve composite optical path control and multi-surface light emitting configuration. Since the second portion L2 and the third portion L3 of the light L change their traveling directions through total reflection, the optical element 18' can reduce the energy loss of the light L during the process of reflecting the light, such that the optical element 18' can efficiently guide the light L to a light emitting direction D1 of the optical element 18' and make the light L have a greater light intensity.

In this embodiment, the first light exit surface O1 may be an asymmetric curved surface and the second light exit surface O2 may be a plane. For example, a surface curvature of the first light exit surface O1 may change gradually and continuously and the first light exit surface O1 may comprise at least one freeform surface. Thus, the first light exit surface O1 may finely control the distribution of the emitted light and the degree of expansion in the horizontal direction. Furthermore, the optical element 18' may comprise a transition plane T connected between the first light exit surface O1 and the second light exit surface O2. Thus, the light may be converted into a compressed light spot or a light distribution with enhanced directionality, thereby improving light concentration and lateral light control capability. Still further, the first light entrance surface N1 and the third light entrance surface N3 may be refraction surfaces, and the second light entrance surface N2 may be a light condensing surface. Thus, the first light entrance surface N1 may effectively refract the light to the first light exit surface O1, the second light entrance surface N2 may condense the light to the first sub-reflective surface R21 of the second reflective surface R2, and the third light entrance surface N3 may effectively refract the light to the first reflective surface R1, so as to improve the overall light guide efficiency and spatial adaptability.

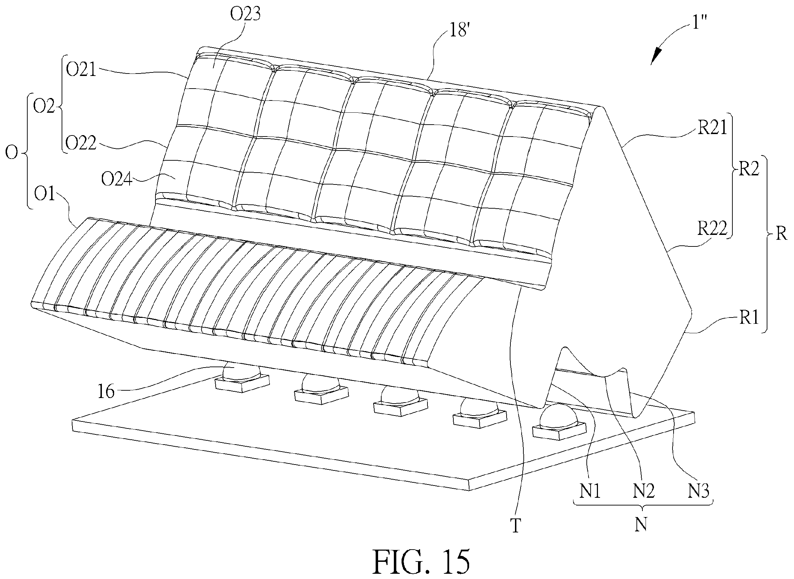

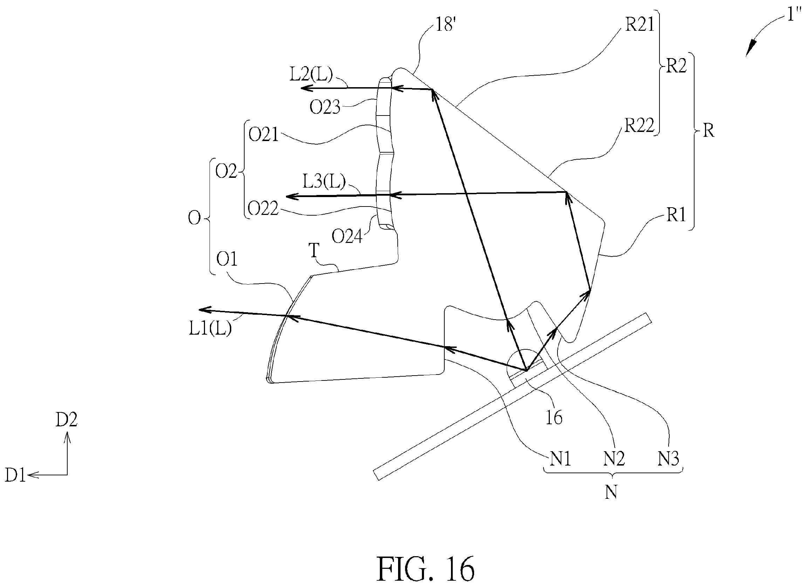

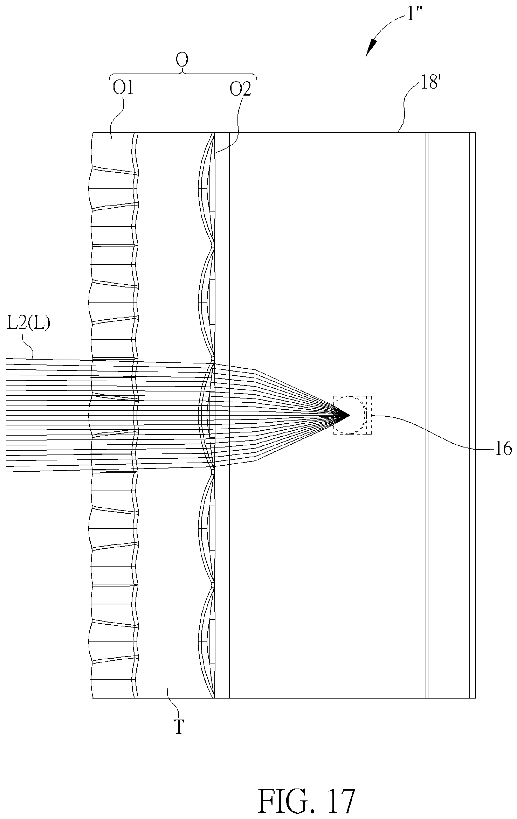

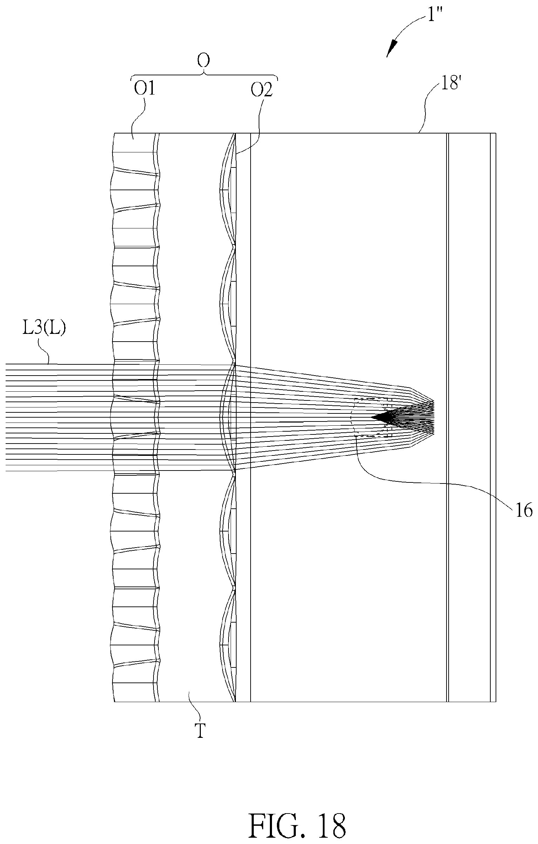

Referring to FIGs. 15 to 18, FIG. 15 is a perspective view illustrating the light source module 1" according to another embodiment of the invention, FIG. 16 is a side view illustrating the light source module 1" shown in FIG. 15, FIG. 17 is a top view illustrating the light source module 1" shown in FIG. 15, and FIG. 18 is another top view illustrating the light source module 1" shown in FIG. 15.

As shown in FIGs. 15 and 16, the second light exit surface O2 may have two aspherical structures O23, O24, wherein the aspherical structure O23 may be located on the first sub-light exit surface O21 and the aspherical structure O24 may be located on the second sub-light exit surface O22. The aspherical structures O23, O24 can condense and optimize the second portion L2 and the third portion L3 of the light L, such that the second portion L2 and the third portion L3 of the light L diffuse horizontally. Furthermore, the first light exit surface O1 may be an asymmetric curved surface, and the transition plane T is connected between the first light exit surface O1 and the second light exit surface O2. Thus, the light may be converted into a compressed light spot or a light distribution with enhanced directionality, thereby improving light concentration and lateral light control capability. Moreover, a surface curvature of the second light exit surface O2 also changes gradually and continuously. Thus, the second light exit surface O2 may finely control the distribution of the emitted light and the degree of expansion in the horizontal direction, as the status of the second portion L2 and the third portion L3 of the light L shown in FIGs. 17 and 18.

It should be noted that the light source module 1" shown in FIGs. 13 to 18 may also be applied to the warning light 1 shown in FIGs. 4 and 12.

As mentioned in the above, the optical element of the invention can make the light travel out of the optical element toward the light exit surfaces in the same side after entering the light entrance surfaces. In this way, the optical element of the invention can efficiently guide the light to the light emitting direction and make the light have a greater light intensity. Furthermore, by the relative arrangement between the first light entrance surface, the second light entrance surface, the third light entrance surface, the first light exit surface, the second light exit surface, the first reflective surface, the third light exit surface, the second reflective surface and the third reflective surface, the optical element of the invention can have the characteristics of high light intensity and miniaturization. Still further, the casing, the heat dissipation plate, the circuit board and the optical element constituting the warning light of the invention may be flexible, such that the warning light may be flexible as a whole. Thus, the warning light can be completely attached to a surface curvature of different windshields, such that the optical element can adapt to various curved surfaces to provide a more flexible lighting effect. For further explanation, since the warning light is flexible, the warning light can elastically deform to be completely attached to the surface curvature of different windshields without adjusting the angle, such that the warning light can improve the problem of light leakage and is suitable for different types of vehicles.

## Claims

1. An optical element (18) **characterized by** the optical element (18) comprising:
a first light entrance surface (N1);
a second light entrance surface (N2) adjacent to the first light entrance surface (N1);
a third light entrance surface (N3) adjacent to the second light entrance surface (N2);
a first light exit surface (O1) arranged relative to the first light entrance surface (N1);
a second light exit surface (O2) adjacent to the first light exit surface (O1);
a first reflective surface (R1) adjacent to the second light exit surface (O2);
a third light exit surface (O3) adjacent to the first reflective surface (R1);
a second reflective surface (R2) adjacent to the third light exit surface (O3); and
a third reflective surface (R3) adjacent to the second reflective surface (R2) and the third light entrance surface (N3);
wherein a first portion (L1) of a light (L) sequentially passes through the first light entrance surface (N1) and the first light exit surface (O1) to travel out of the optical element (18); a second portion (L2) of the light (L) sequentially passes through the second light entrance surface (N2), is reflected by the first reflective surface (R1), and passes through the second light exit surface (O2) to travel out of the optical element (18); a third portion (L3) of the light (L) sequentially passes through the third light entrance surface (N3), is reflected by the third reflective surface (R3), is reflected by the second reflective surface (R2), and passes through the third light exit surface (O3) to travel out of the optical element (18).

2. The optical element (18) of claim 1 further **characterized in that** the first portion (L1) of the light (L) travels out of the optical element (18) along a first light path (P1), the second portion (L2) of the light (L) travels out of the optical element (18) along a second light path (P2), the third portion (L3) of the light (L) travels out of the optical element (18) along a third light path (P3), and the second light path (P2) is located between the first light path (P1) and the third light path (P3).

3. The optical element (18) of claim 2 further **characterized in that** the first light path (P1), the second light path (P2) and the third light path (P3) do not intersect each other.

4. The optical element (18) of any of the preceding claims further **characterized in that**, in a direction (D2) perpendicular to a light emitting direction (D1) of the optical element (18), the first light exit surface (O1) is lower than the second light exit surface (O2), the second light exit surface (O2) is lower than the third light exit surface (O3), and the first reflective surface (R1) is lower than the second reflective surface (R2).

5. The optical element (18) of any of the preceding claims further **characterized in that** the optical element (18) is arranged relative to a light transmitting element (3); wherein, when an angle between the light transmitting element (3) and a light emitting direction (D1) of the optical element (18) is between 10 degrees and 80 degrees, an angle between the first reflective surface (R1) and the light emitting direction (D1) is between 70 degrees and 20 degrees, and an angle between the second reflective surface (R2) and the light emitting direction (D1) is between 70 degrees and 20 degrees.

6. The optical element (18) of any of the preceding claims further **characterized in that** the first light exit surface (O1) is an asymmetric curved surface, and at least one of the second light exit surface (O2) and the third light exit surface (O3) is an aspherical structure.

7. A warning light (1) **characterized by** the warning light (1) comprising:
a casing (10);
a heat dissipation plate (12) disposed in the casing (10);
a circuit board (14) disposed in the casing (10) and stacked on the heat dissipation plate (12);
a plurality of light sources (16) disposed on the circuit board (14) at intervals; and
an optical element (18) disposed in the casing (10) and stacked on the circuit board (14), a light (L) emitted by each of the plurality of light sources (16) traveling out of the optical element (18);
wherein the casing (10) and the optical element (18) are flexible.

8. The warning light (1) of claim 7 further **characterized in that** the heat dissipation plate (12) and the circuit board (14) are flexible like the casing (10) and the optical element (18).

9. The warning light (1) of claim 7 or 8 further **characterized in that** the casing (10) comprises a plurality of deformable structures (104), wherein the plurality of deformable structures (104) protrude form opposite sides of the casing (10).

10. The warning light (1) of any of claims 7 to 9 further **characterized in that** the warning light (1) is attached to a surface (30) of a light transmitting member (3) by the casing (10); wherein, when an angle between the light transmitting member (3) and a horizontal plane is between 10 degrees and 80 degrees, an angle between an attached portion (102) of the casing (10) and the surface (30) of the light transmitting member (3) is between 12 degrees and 82 degrees.

11. The warning light (1) of any of claims 7 to 10 further **characterized in that** the optical element (18) comprises:
a first light entrance surface (N1);
a second light entrance surface (N2) adjacent to the first light entrance surface (N1);
a third light entrance surface (N3) adjacent to the second light entrance surface (N2);
a first light exit surface (O1) arranged relative to the first light entrance surface (N1);
a second light exit surface (O2) adjacent to the first light exit surface (O1);
a first reflective surface (R1) adjacent to the second light exit surface (O2);
a third light exit surface (O3) adjacent to the first reflective surface (R1);
a second reflective surface (R2) adjacent to the third light exit surface (O3); and
a third reflective surface (R3) adjacent to the second reflective surface (R2) and the third light entrance surface (N3);
wherein a first portion (L1) of the light (L) sequentially passes through the first light entrance surface (N1) and the first light exit surface (O1) to travel out of the optical element (18); a second portion (L2) of the light (L) sequentially passes through the second light entrance surface (N2), is reflected by the first reflective surface (R1), and passes through the second light exit surface (O2) to travel out of the optical element (18); a third portion (L3) of the light (L) sequentially passes through the third light entrance surface (N3), is reflected by the third reflective surface (R3), is reflected by the second reflective surface (R2), and passes through the third light exit surface (O3) to travel out of the optical element (18).

12. The warning light (1) of claim 11 further **characterized in that** the first portion (L1) of the light (L) travels out of the optical element (18) along a first light path (P1), the second portion (L2) of the light (L) travels out of the optical element (18) along a second light path (P2), the third portion (L3) of the light (L) travels out of the optical element (18) along a third light path (P3), and the second light path (P2) is located between the first light path (P1) and the third light path (P3).

13. The warning light (1) of claim 11 or 12 further **characterized in that**, in a direction (D2) perpendicular to a light emitting direction (D1) of the optical element (18), the first light exit surface (O1) is lower than the second light exit surface (O2), the second light exit surface (O2) is lower than the third light exit surface (O3), and the first reflective surface (R1) is lower than the second reflective surface (R2).

14. An optical element (18') **characterized by** the optical element (18') comprising:
a light entrance structure (N) configured to receive a light (L);
a light exit structure (O) comprising a first light exit surface (O1) and a second light exit surface (O2), the first light exit surface (O1) and the second light exit surface (O2) are different in geometrical shape; and
a reflective structure (R) connected between the light entrance structure (N) and the light exit structure (O), the reflective structure (R) comprising a first reflective surface (R1) and a second reflective surface (R2), the second reflective surface (R2) being located between the first reflective surface (R1) and the second light exit surface (O2).

15. The optical element (18') of claim 14 further **characterized in that** the first light exit surface (O1) is an asymmetric curved surface, the second light exit surface (O2) has two aspherical structures (O23, O24), and the optical element (18') comprises a transition plane (T) connected between the first light exit surface (O1) and the second light exit surface (O2).

16. The optical element (18') of claim 14 or 15 further **characterized in that** a surface curvature of the first light exit surface (O1) changes gradually and continuously, the first light exit surface (01) comprises at least one freeform surface, and a surface curvature of the second light exit surface (O2) also changes gradually and continuously.

17. The optical element (18') of any of claims 14 to 16 further **characterized in that** the first reflective surface (R1) is a freeform surface with total reflection function, and the second reflective surface (R2) is a plane with total reflection function.

18. The optical element (18') of any of claims 14 to 17 further **characterized in that** a first portion (L1) of the light (L) sequentially passes through a first light entrance surface (N1) of the light entrance structure (N) and the first light exit surface (O1) to travel out of the optical element (18'); a second portion (L2) of the light (L) sequentially passes through a second light entrance surface (N2) of the light entrance structure (N), is reflected by a first sub-reflective surface (R21) of the second reflective surface (R2), and passes through a first sub-light exit surface (O21) of the second light exit surface (O2) to travel out of the optical element (18'); a third portion (L3) of the light (L) sequentially passes through a third light entrance surface (N3) of the light entrance structure (N), is reflected by the first reflective surface (R1), is reflected by a second sub-reflective surface (R22) of the second reflective surface (R2), and passes through a second sub-light exit surface (O22) of the second light exit surface (O2) to travel out of the optical element (18'); the second portion (L2) and the third portion (L3) of the light (L) intersect each other inside the optical element (18').

19. The optical element (18') of claim 18 further **characterized in that** the first light entrance surface (N1) and the third light entrance surface (N3) are refraction surfaces, and the second light entrance surface (N2) is a light condensing surface.
